# EUROPÄISCHE PATENTSCHRIFT

(11) **EP 1 700 743 B1**
(45) Veröffentlichungstag und Bekanntmachung des Hinweises auf die Patenterteilung: **11.06.2008**
(21) Anmeldenummer: 05027836.5
(22) Anmeldetag: 20.12.2005
(51) Int. Cl.: B60R 5/04, B60J 1/20

(54) **Sichtschutzelement für einen Gepäckraum eines Fahrzeugs sowie Heckklappe mit einem derartigen Sichtschutzelement**
Barrier for preventing viewing in a trunk of a vehicle and tailgate with this barrier
Barrière visuelle pour coffre de véhicule et hayon arrière équipé de cette barrière

(30) Priorität: 11.03.2005 DE 102005011320
(43) Veröffentlichungstag der Anmeldung: 13.09.2006
(73) Patentinhaber: Dr. Ing. h.c. F. Porsche Aktiengesellschaft, 71287 Weissach (DE)
(72) Erfinder: Fengel, Paul-Dieter, 71735 Eberdingen (DE); Bühner, Roland, 70736 Fellbach-Schmiden (DE)

(56) Entgegenhaltungen:
- FR-A- 2 720 696
- FR-A- 2 749 878
- US-A- 6 135 191
- US-A1- 2002 092 553

## Beschreibung

Bei der Erfindung wird ausgegangen von einem Kraftfahrzeug mit einem Sichtschutzelement gemäß Oberbegriff des Anspruch 1.

Ein Sichtschutzelement kann der DE 199 02 205 A1 entnommen werden. Es dient zum zumindest teilweise Abdecken eines auch als Kofferraum bezeichneten Gepäckraums in einem Fahrzeug, insbesondere Kraftfahrzeug. Das Sichtschutzelement weist einen Träger auf, der nach der bekannten Ausführung als umlaufender Rahmen ausgeführt ist, in dem ein flexibles Flächengebilde aufgespannt gehalten ist bzw. welcher Rahmen mit dem Flächengebilde bespannt ist. Das Flächengebilde ist aus einem Textilmaterial hergestellt.

Aus der US 42 22 600 A ist ferner ein Sichtschutzelement für einen Gepäckraum bekannt, welches an einer Innenseite einer Heckklappe angeordnet ist, die den Gepäckraum freigeben oder verschließen kann. Das Sichtschutzelement ist hier aus starren, plattenförmigen Elementen zusammengesetzt, die über Filmscharniere oder ähnliches miteinander verbunden sind, so dass das Sichtschutzelement zusammen- und auseinandergefaltet werden kann.

Ein Sichtschutzelement der gattunsbildenden Art kann der FR 2 749 878 entnommen werden.

Aufgabe der Erfindung ist es, ein Sichtschutzelement der eingangs genannten Art gewichtsoptimiert auszuführen.

Gelöst wird diese Aufgabe mit einem Kraftfahrzeug, welches die in Anspruch 1 genannten Merkmale umfasst. Weiterbildungen der Erfindung sind jeweils in den zugehörigen Unteransprüchen angegeben.

Die mit der Erfindung hauptsächlich erzielten Vorteile sind darin zu sehen, dass eine Gewichtsersparnis bei dem Sichtschutzelement durch einen reduzierten Materialeinsatz am Träger für das Flächengebilde erreicht wird, da lediglich eine Basis als Träger vorgesehen ist, von der zumindest ein Federarm ausgeht, der das Flächengebilde gegenüber der Basis aufgespannt hält. Auf einen umlaufenden Rahmen kann somit bei dem erfindungsgemäßen Sichtschutzelement verzichtet werden. Ferner ist vorteilhaft, dass eine Beschädigung des Sichtschutzelements in vielen Fällen vermieden werden kann, wenn entsprechendes Ladegut in dem Gepäckraum verstaut ist und beispielsweise die Heckklappe geschlossen wird, da beim Auftreffen des Sichtschutzelementes auf diesen Gegenstand im Gepäckraum der Federarm federnd ausweichen kann.

Nach einem in Anspruch 3 angegebenen Ausführungsbeispiel ist vorteilhaft, dass gegebenenfalls das flexible Flächengebilde bei einer Instandsetzung ersetzt werden kann.

Für eine einfache Ausführung der lösbaren Verbindung kann eine Öffnung in dem Flächengebilde vorgesehen sein, in den ein Vorsprung, insbesondere Haken, der vom Federarm ausgeht, eingreift, wie dies nach Anspruch 4 vorgesehen ist.

Mit den in Anspruch 5 genannten Merkmalen wird in vorteilhafter Weise ein Austausch des gesamten Sichtschutzelements möglich bzw. ein Entfernen desselben, wenn entsprechend große Gepäckstücke im Gepäckraum transportiert werden sollen.

Besonders bevorzugt wird hinsichtlich eines Leichtbaus ein Flächengebilde, welches eine Stoffbahn umfasst, wie dies in Anspruch 6 angegeben ist.

Gemäß einer in Anspruch 7 angegebenen Weiterbildung wird ein weites Aufspannen des Flächengebildes erreicht, was mit weiteren Merkmalen gemäß Anspruch 8 weiter verbessert werden kann.

Bei einem in Anspruch 9 angegebenen Ausführungsbeispiel lässt sich das Flächengebilde auf besonders einfache Art und Weise an der Basis befestigen.

Für ein großflächiges Aufspannen des Flächengebildes wird nach einer Weiterbildung mit den in Anspruch 10 genannten Merkmalen erreicht.

Mit dem erfindungsgemäßen Sichtschutz kann so unter dem flächigen Rahmenabschnitt der Heckklappe ein vollständig abgedeckter Gepäckraum bereitgestellt werden, der von außen, also auch über die Heckscheibe, nicht eingesehen werden kann.

Die Erfindung wird nachfolgend anhand von Ausführungsbeispielen mit Bezug auf die Zeichnung näher erläutert. Es zeigen:
Fig. 1 in perspektivischer Ansicht ein Fahrzeug mit einer Heckklappe,
Fig. 2 einen Schnitt durch die Heckklappe entlang der Linie II-II in Fig. 1 und
Fig.3+4 unterschiedliche Ansichten eines an der Heckklappe befestigbaren Sichtschutzelements.

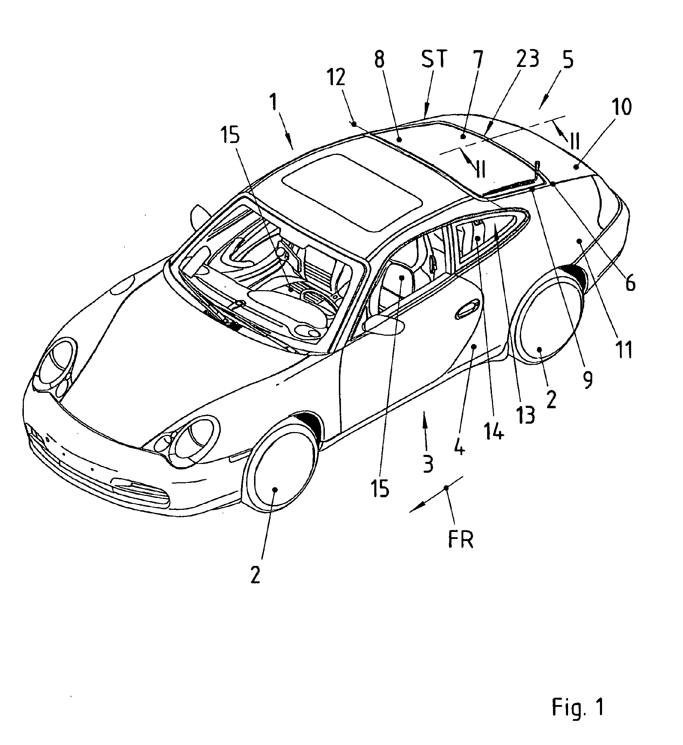

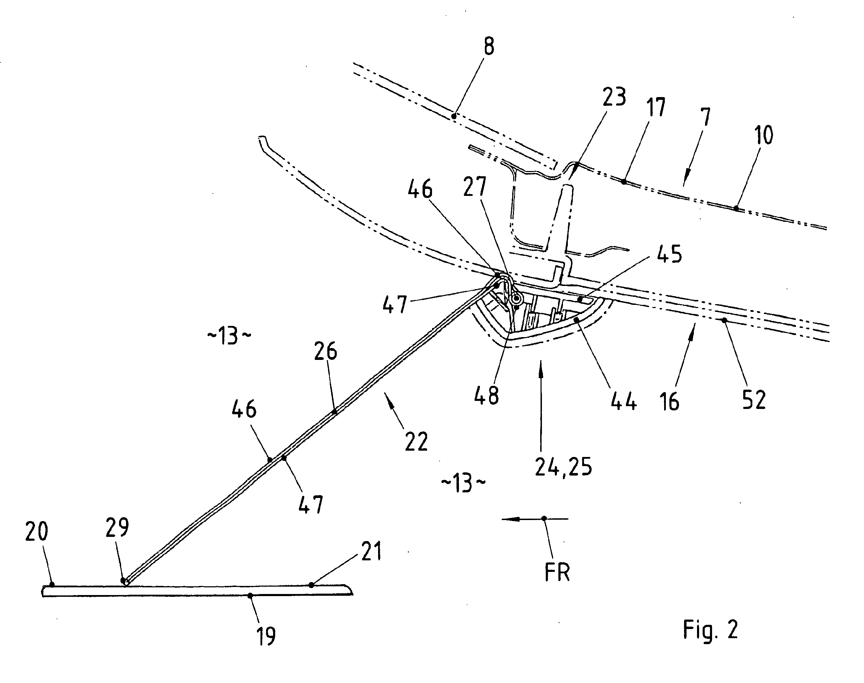

In Fig. 1 ist ein Fahrzeug 1, insbesondere Kraftfahrzeug, gezeigt, welches einen von Rädern 2 getragenen Aufbau 3 mit einer Karosserie 4 umfasst, welche Karosserie 4 im Heckbereich 5 einen Ausschnitt 6 aufweist, in den eine Heckklappe 7 eingesetzt ist. Die Heckklappe 7 umfasst eine Heckscheibe 8, die von einem Rahmen 9 eingefasst ist. In der hauptsächlichen Vorwärtsfahrtrichtung FR des Fahrzeugs gesehen weist der Rahmen 9 einen hinter der Heckscheibe 8 liegenden flächigen Rahmenabschnitt 10 auf, der undurchsichtig und Bestandteil einer Fahrzeugaußenhaut 11 der Karosserie 4 ist. Die Heckklappe 7 ist ferner an ihren oberen Ecken um eine parallel zur Fahrzeugquerrichtung verlaufende Schwenkachse 12 an der Karosserie 4 angelenkt, so dass sie aus der in Fig. 1 gezeigten Schließstellung ST in eine nach oben geklappte, hier nicht dargestellte Öffnungsstellung geklappt werden kann, in der sie einen innerhalb des Fahrzeugs 1 liegenden Gepäckraum 13 freigibt, der sich hinter Fahrzeugsitzen 14 bzw. 15 befindet und in der Schließstellung ST von der Heckklappe 7 verschlossen wird. Das Fahrzeug 1 kann als zwei- oder mehrsitziges Kraftfahrzeug ausgeführt sein. Im Falle eines bevorzugten Zweisitzers befindet sich der Gepäckraum 13 hinter dem Fahrersitz bzw. Beifahrersitz 15. Im gezeigten Ausführungsbeispiel ist das Fahrzeug jedoch viersitzig mit einer hinteren Sitzreihe ausgeführt, die zumindest den gezeigten hinteren Sitz 14 aufweist. Dem Gepäckraum 13 zugewandt ist definitionsgemäß eine Innenseite 16 der Heckklappe 7, die überdies eine der Außenhaut 11 zugeordnete Außenseite 17 besitzt. Der Gepäckraum 13 weist einen Gepäckraumboden 19 (Fig. 2) auf, der sich von dem Sitz 14 oder 15 bis unter den flächigen Rahmenabschnitt 10 der Heckklappe 7 erstreckt und in Fig. 2 lediglich teilweise dargestellt ist. Der Gepäckraumboden 19 besitzt einen ersten Abschnitt, der als Hutablage 20 bezeichnet wird; er weist ferner einen sich - in Fahrtrichtung FR gesehen - an die Hutablage 20 dahinter anschließenden Kofferraumboden 21 auf. In Fig. 2 ist die Hutablage und der Kofferraumboden 21 eben ausgeführt. Nach einem nicht dargestellten Ausführungsbeispiel kann jedoch der Kofferraumboden 21 gegenüber der Hutablage 20 auf einem tieferen Niveau liegen, so dass zwischen Hutablage 20 und Kofferraumboden 21 eine abfallende Stufe vorliegt, die nicht gezeigt ist.

Damit insbesondere der unter dem flächigen Rahmenabschnitt 10 liegende Teilbereich des Gepäckraums 13 von der Außenseite des Fahrzeugs 1 her, insbesondere durch die Heckscheibe 8, nicht eingesehen werden kann, ist an der Innenseite 16 der Heckklappe 7 ein Sichtschutzelement 22 vorzugsweise lösbar befestigt, welches sich zwischen der Innenseite 16 und dem Gepäckraumboden 19 beispielsweise schräg erstreckt. Insbesondere ist das Sichtschutzelement 22 an der Innenseite 16 in einem Übergangsabschnitt 23 der Heckklappe 7 befestigt, der zwischen der Heckscheibe 8 und dem flächigen Rahmenabschnitt 10 der Heckklappe 7 liegt.

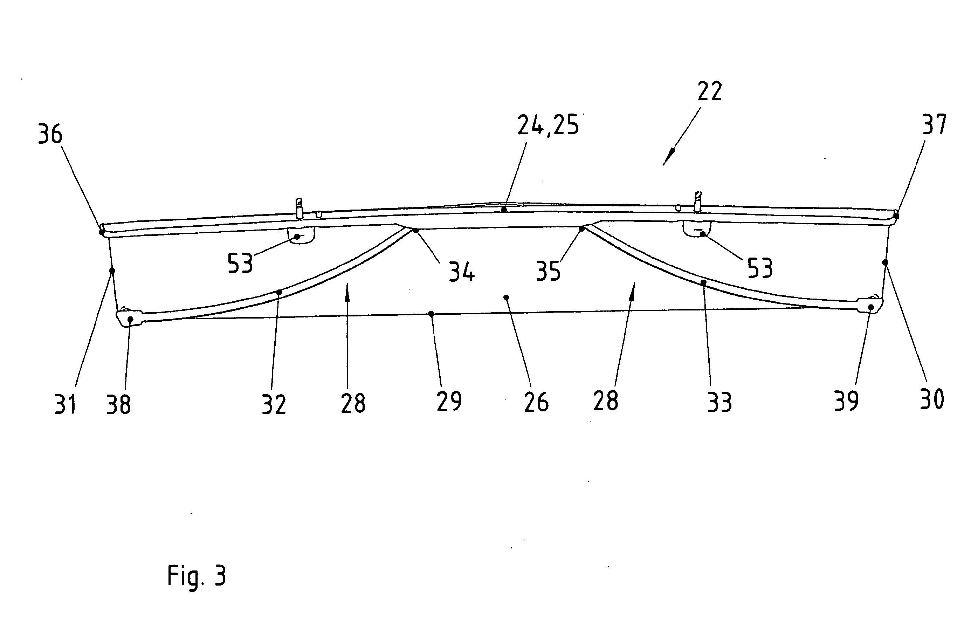

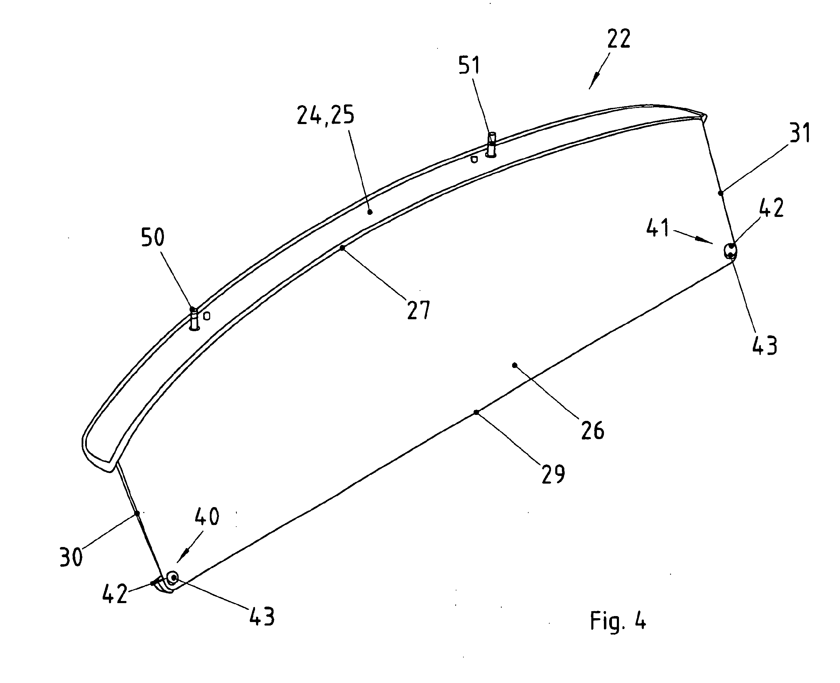

Anhand der Fig. 2 bis 4 wird im folgenden das Sichtschutzelement 22 näher erläutert: Zusammengesetzt ist das Sichtschutzelement 22 aus einem Träger 24, der eine etwa parallel zur Innenseite 16 verlaufende Basis 25 aufweist. Ferner ist an dem Träger 24 ein flexibles Flächengebilde 26 aufgespannt gehalten, das beispielsweise als Stoffbahn ausgeführt ist. Damit das Flächengebilde 26 gegenüber dem Träger 24 aufgespannt gehalten werden kann, ist es mit einer ersten Langseite 27 an der Basis 25 befestigt und über eine an der Basis 25 angebrachte Spanneinrichtung 28 mit seiner zweiten Langseite 29 gegenüber der Basis 25 gespannt. Das Flächengebilde 26 weist außerdem noch zwei Schmalseiten 30 und 31 auf, so dass es beispielsweise streifenförmig realisiert ist. Das Sichtschutzelement 22 mit dem Flächengebilde 26 erstreckt sich über die Breite des Gepäckraums 13.

Die Spanneinrichtung 28 umfasst zumindest einen von der Basis 25, vorzugsweise etwa mittig, ausgehenden und beispielsweise gebogen verlaufenden Federarm 32 auf. Im gezeigten Ausführungsbeispiel sind zwei Federarme 32 und 33 vorgesehen. Die Federarme erstrecken sich - ausgehend von ihrem jeweiligen ersten, an der Basis 25 angebrachten Ende 34 bzw. 35 unter einem Winkel in Richtung der sich gegenüberliegenden Enden 36 bzw. 37 der Basis 25. Mit anderen Worten: Ausgehend von ihrem Ende 34 bzw. 35 erstrecken sie sich voneinander weg. Die Federarme können insbesondere in Richtung von der Basis 25 weg vorgespannt sein, so dass sie auf das Flächengebilde 26 eine etwa parallel zu den Schmalseiten 30 bzw. 31 verlaufende Federkraft bzw. Spannkraft aufbringen. Hierfür sind die Federarme mit Abstand zu ihrem ersten Ende 34 bzw. 35 mit dem Flächengebilde 26 verbunden. Vorzugsweise erfolgt diese Verbindung am zweiten Ende 38 bzw. 39 des jeweiligen Federarms 32 bzw. 33. Die Verbindung zwischen Federarm 32 bzw. 33 und dem Flächengebilde 26 ist lösbar, wofür insbesondere in einem zwischen jeweiliger Schmalseite 30 bzw. 31 und der zweiten Langseite 29 liegende Eckbereich 40 bzw. 41 das Flächengebilde 26 jeweils eine Öffnung 42 aufweist, in die ein beispielsweise als Haken 43 ausgebildeter Vorsprung des Federarms 32 bzw. 33 eingehängt ist. Die Öffnung 42 bzw. die Öffnungen 42 können jeweils mit einer öse zur Verstärkung versehen sein.

Die Basis 25 des Trägers 24 weist - wie Fig. 2 zeigt - zwei Formteile 44 und 45 auf, die aneinander befestigt sind und die zwischen sich die erste Langseite 27 des Flächengebildes 26 aufnehmen, wodurch das beispielsweise aus zwei Lagen 46 und 47 bestehende Flächengebilde 26 an der Basis 25 gehalten ist. Wie Fig. 2 noch zeigt, kann zwischen den beiden Lagen 46 und 47 ein Verstärkungselement 48 eingefädelt sein, welches ein Herausrutschen des Flächengebildes zwischen den beiden Formteilen 44 und 45 verhindert. Das Formteil 45 ist mit der Innenseite 16 der Heckklappe 7 verbunden und das Formteil 44 bildet insbesondere eine Abdeckung bzw. Verkleidung für das Formteil 45.

Für eine lösbare Befestigung des Sichtschutzes 22 an der Innenseite 16 der Heckklappe 7 ist eine entsprechende Befestigungseinrichtung 49 an der Basis 25 vorgesehen, die beispielsweise die Basis 25 durchsetzende Stifte 50 bzw. 51 aufweist, die in entsprechende, die Innenseite 16 verkleidende Teile 52 eingreifen bzw. hintergreifen und so die Basis 25 an diesem Verkleidungsteil 52 halten. Vorzugsweise sind die Stifte 50 und 51 über eine entsprechende Betätigungseinrichtung 53 drehbar, wodurch die Befestigung an der Innenseite 16 wahlweise aufgehoben oder verriegelt werden kann.

## Patentansprüche

1. Kraftfahrzeug (1) mit einer Heckklappe (7), die wahlweise einen Gepäckraum (13) verschließt oder freigibt und die einen undurchsichtigen Rahmenabschnitt (10) und eine Heckscheibe (8) aufweist, und mit einem Sichtschutzelement (22) für den Gepäckraum (13) des Kraftfahrzeugs (1), welches Sichtschutzrelement (22) mit einem Träger (24) und mit einem daran aufgespannt gehaltenen flexiblen Flächengebilde (26) versehen ist, wobei der Träger (24) eine Basis (25) umfasst, von der zumindest mit einem ersten Ende (34, 35) ein Federarm (32, 33) einer Spanneinrichtung (28) für das Flächengebilde (26) ausgeht, und dass der Federarm (32, 33) in einem Abstand zu dem ersten Ende (34, 35) mit dem Flächengebilde (26) verbunden ist, **dadurch gekennzeichnet, dass** der Gepäckraum (13) einen Gepäckraumboden (19) aufweist, der sich von einem Sitz (14, 15) des Kraftfahrzeugs (1) bis unter den undurchsichtigen flächigen Rahmenabschnitt (10) der Heckklappe (7) erstreckt, dass das Sichtschutzelement (22) etwa in einem Übergangsabschnitt (23) zwischen Heckscheibe (8) und flächigern Rahmenabschnitt (10) an der Innenseite (16) der Heckklappe (7) befestigt oder lösbar befestigt ist, und dass sich das Sichtschutzelement (22) zwischen der Innenseite (16) und dem Gepäckraumboden (19) erstreckt.

2. Kraftfahrzeug nach Anspruch 1, **dadurch gekennzeichnet, dass** der Federarm (32, 33) ein zweites Ende (38, 39) aufweist und mit diesem mit dem Flächengebilde (26) verbunden ist.

3. Kraftfahrzeug nach Anspruch 1 oder 2, **dadurch gekennzeichnet, dass** der Federarm (32, 33) lösbar mit dem Flächengebilde (26) verbunden ist.

4. Kraftfahrzeug nach einem der vorhergehenden Ansprüche, **dadurch gekennzeichnet, dass** der Federarm (32, 33) mit einem Haken (43) in eine Öffnung (42), vorzugsweise Öse, am Flächengebilde (26) eingehängt ist.

5. Kraftfahrzeug nach Anspruch 1, **dadurch gekennzeichnet, dass** die Basis (25) des Trägers (24) an einer den Gepäckraum (13) verschließenden Heckklappe (7) eines Fahrzeugs (1) lösbar befestigbar ist.

6. Kraftfahrzeug nach Anspruch 1, **dadurch gekennzeichnet, dass** das Flächengebilde (26) eine Stoffbahn umfasst.

7. Kraftfahrzeug nach einem der vorhergehenden Ansprüche, **dadurch gekennzeichnet, dass** das Flächengebilde (26) mit einer ersten Langseite (27) an der Basis (25) befestigt ist und die Öffnung (42) für den Haken (43) des Federarms (32, 33) benachbart zu einer zweiten Langseite (29) liegt.

8. Kraftfahrzeug nach einem der vorhergehenden Ansprüche, d**adurch gekennzeichnet, dass** die Öffnung (42) für den Haken (43) in einer Ecke (40, 41) zwischen der zweiten Langseite (29) und einer Schmalseite (30, 31) des Flächengebildes (26) liegt.

9. Kraftfahrzeug nach einem der vorhergehenden Ansprüche, **dadurch gekennzeichnet, dass** die Basis (25) des Trägers (24) aus zwei Formteilen (44, 45) zusammengesetzt ist und dass die erste Langseite (27) des Flächengebildes (26) zwischen den beiden Formteilen (44, 45) haltend aufgenommen ist.

10. Kraftfahrzeug nach Anspruch 1, **dadurch gekennzeichnet, dass** die Spanneinrichtung (28) zwei Federarme (32, 33) aufweist, die sich - ausgehend von ihrem ersten Ende (34, 35) an der Basis (25) - voneinander weg erstrecken.

11. Kraftfahrzeug nach Anspruch 10, **dadurch gekennzeichnet, dass** die beiden Federarme (32, 33) etwa mittig von der Basis (25) ausgehen.

12. Kraftfahrzeug nach einem der vorhergehenden Ansprüche, **dadurch gekennzeichnet, dass** die Basis (25) an der Innenseite (16) der Heckklappe (7), vorzugsweise lösbar, befestigt ist.

13. Kraftfahrzeug nach einem der vorhergehenden Ansprüche, **dadurch gekennzeichnet, das**s das Sichtschutzelement (22) im wesentlichen unbeweglich an der Innenseite (16) der Heckklappe (7) befestigt ist.

## Claims

1. Motor vehicle (1) having a rear lid (7) which selectively closes off or opens a luggage space (13) and which has a nontransparent frame section (10) and a rear window (8), and having a screening element (22) for the luggage space (13) of the motor vehicle (1), which screening element (22) is provided with a support (24) and with a flexible sheet (26) which is held thereon so as to be under tension, with the support (24) comprising a base (25) from which a spring arm (32, 33) of a tensioning device (28) for the sheet (26) proceeds at least with a first end (34, 35), and with the spring arm (32, 33) being connected to the sheet (26) at a distance from the first end (34, 35), **characterized in that** the luggage space (13) has a luggage space base (19) which extends from a seat (14, 15) of the motor vehicle (1) to below the nontransparent planar frame section (10) of the rear lid (7), **in that** the screening element (22) is fastened or detachably fastened to the inner side (16) of the rear lid (7) approximately in a transition section (23) between the rear window (8) and the planar frame section (10), and **in that** the screening element (22) extends between the inner side (16) and the luggage space base (19).

2. Motor vehicle according to Claim 1, **characterized in that** the spring arm (32, 33) has a second end (38, 39) and is connected by means of said second end (38, 39) to the sheet (26).

3. Motor vehicle according to Claim 1 or 2, **characterized in that** the spring arm (32, 33) is detachably connected to the sheet (26).

4. Motor vehicle according to one of the preceding claims, **characterized in that** the spring arm (32, 33) is hooked with a hook (43) into an opening (42), preferably eyelet, on the sheet (26).

5. Motor vehicle according to Claim 1, **characterized in that** the base (25) of the support (24) is detachably fastened to a rear lid (7), which closes off the luggage space (13), of a vehicle (1).

6. Motor vehicle according to Claim 1, **characterized in that** the sheet (26) comprises a material web.

7. Motor vehicle according to one of the preceding claims, **characterized in that** the sheet (26) is fastened with a first long side (27) to the base (25) and the opening (42) for the hook (43) of the spring arm (32, 33) is situated adjacent to a second long side (29).

8. Motor vehicle according to one of the preceding claims, **characterized in that** the opening (42) for the hook (43) is situated in a corner (40, 41) between the second long side (29) and a narrow side (30, 31) of the sheet (26).

9. Motor vehicle according to one of the preceding claims, **characterized in that** the base (25) of the support (24) is composed of two moulded parts (44, 45) and **in that** the first long side (27) of the sheet (26) is held retentively between the two moulded parts (44, 45).

10. Motor vehicle according to Claim 1, **characterized in that** the tensioning device (28) has two spring arms (32, 33) which - proceeding from their first end (34, 35) at the base (25) - extend away from one another.

11. Motor vehicle according to Claim 10, **characterized in that** the two spring arms (32, 33) proceed approximately centrally from the base (25).

12. Motor vehicle according to one of the preceding claims, **characterized in that** the base (25) is fastened, preferably in a detachable fashion, to the inner side (16) of the rear lid (7).

13. Motor vehicle according to one of the preceding claims, **characterized in that** the screening element (22) is fastened in a substantially immovable manner to the inner side (16) of the rear lid (7).

## Revendications

1. Véhicule automobile (1) comprenant un hayon arrière (7), qui ferme ou ouvre de manière sélective un compartiment à bagages (13) et qui présente une portion de cadre opaque (10) et une vitre arrière (8), et comprenant un élément formant barrière visuelle (22) pour le compartiment à bagages (13) du véhicule automobile (1), lequel élément formant barrière visuelle (22) est pourvu d'un support (24) et d'une structure en toile (26) flexible maintenue tendue sur celui-ci, le support (24) comprenant une base (25) depuis laquelle part, au moins avec une première extrémité (34, 35), un bras de ressort (32, 33) d'un dispositif de tensionnement (28) pour la structure en toile (26), et le bras de ressort (32, 33) étant connecté à distance de la première extrémité (34, 35) à la structure en toile (26), **caractérisé en ce que** le compartiment à bagages (13) présente un fond de compartiment à bagages (19) qui s'étend depuis un siège (14, 15) du véhicule automobile (1) jusqu'en dessous de la portion de cadre plane opaque (10) du hayon arrière (7), **en ce que** l'élément formant barrière visuelle (22) est fixé ou est fixé de manière détachable approximativement dans une portion de transition (23) entre la vitre arrière (8) et la portion de cadre plane (10) au niveau du côté intérieur (16) du hayon arrière (7), et **en ce que** l'élément formant barrière visuelle (22) s'étend entre le côté intérieur (16) et le fond du compartiment à bagages (19).

2. Véhicule automobile selon la revendication 1, **caractérisé en ce que** le bras de ressort (32, 33) présente une deuxième extrémité (38, 39) et est connecté par celle-ci à la structure en toile (26).

3. Véhicule automobile selon la revendication 1 ou 2, **caractérisé en ce que** le bras de ressort (32, 33) est connecté de manière détachable à la structure en toile (26).

4. Véhicule automobile selon l'une quelconque des revendications précédentes, **caractérisé en ce que** le bras de ressort (32, 33) est accroché avec un crochet (43) dans une ouverture (42), de préférence un oeillet, à la structure en toile (26).

5. Véhicule automobile selon la revendication 1, **caractérisé en ce que** la base (25) du support (24) peut être fixée de manière détachable à un hayon arrière (7) d'un véhicule automobile (1) fermant le compartiment à bagages (13).

6. Véhicule automobile selon la revendication 1, **caractérisé en ce que** la structure en toile (26) est une bande d'étoffe.

7. Véhicule automobile selon l'une quelconque des revendications précédentes, **caractérisé en ce que** la structure en toile (26) est fixée par un premier long côté (27) à la base (25) et l'ouverture (42) pour le crochet (43) du bras de ressort (32, 33) se situe à proximité d'un deuxième long côté (29).

8. Véhicule automobile selon l'une quelconque des revendications précédentes, **caractérisé en ce que** l'ouverture (42) pour le crochet (43) se situe dans un coin (40, 41) entre le deuxième long côté (29) et un petit côté (30, 31) de la structure en toile (26).

9. Véhicule automobile selon l'une quelconque des revendications précédentes, **caractérisé en ce que** la base (25) du support (24) se compose de deux parties moulées (44, 45) et **en ce que** le premier long côté (27) de la structure en toile (26) est reçu de manière fixée entre les deux parties moulées (44, 45).

10. Véhicule automobile selon la revendication 1, **caractérisé en ce que** le dispositif de tensionnement (28) présente deux bras de ressort (32, 33) qui s'étendent depuis leur première extrémité (34, 35) au niveau de la base (25), à l'écart l'un de l'autre.

11. Véhicule automobile selon la revendication 10, **caractérisé en ce que** les deux bras de ressort (32, 33) partent approximativement centralement depuis la base (25) .

12. Véhicule automobile selon l'une quelconque des revendications précédentes, **caractérisé en ce que** la base (25) est fixée au côté intérieur (16) du hayon arrière (7), de préférence de manière détachable.

13. Véhicule automobile selon l'une quelconque des revendications précédentes, **caractérisé en ce que** l'élément formant barrière visuelle (22) est fixé essentiellement de manière immobile au côté intérieur (16) du hayon arrière (7).
